# EUROPEAN PATENT SPECIFICATION

(11) **EP 3 698 087 B1**
(45) Date of publication and mention of the grant of the patent: **19.07.2023**
(21) Application number: 18869148.9
(22) Date of filing: 17.10.2018
(51) Int. Cl.: F24F 11/41, F24F 13/10, F24F 12/00, F24F 13/12, F24F 11/81, F24F 110/10, F24F 110/20

(54) **FLOW CONTROL ARRANGEMENT FOR AN AIR VENTILATION SYSTEM**
STRÖMUNGSREGELUNGSANORDNUNG FÜR EIN BELÜFTUNGSSYSTEM
AGENCEMENT DE COMMANDE D'ÉCOULEMENT POUR SYSTÈME DE VENTILATION D'AIR

(30) Priority: 20.10.2017 SE 1751304
(43) Date of publication of application: 26.08.2020
(73) Proprietor: Swegon Operations AB, 535 23 Kvänum (SE)
(72) Inventor: OLTEGEN, Daniel, 531 50 Lidköping (SE); FRANSSON, Anders, 671 92 Arvika (SE); HAGMAN, Magnus, 534 30 Vara (SE)
(74) Representative: Westpatent AB
(86) International application number: PCT/SE2018/051054
(87) International publication number: WO 2019/078774

(56) References cited:
- EP-A1- 1 962 030
- EP-A1- 3 136 007
- WO-A2-2011/022331
- WO-A2-2011/022331
- DE-U1-202012 001 761
- JP-U- S5 610 244
- US-A- 5 375 413
- US-A1- 2002 164 944
- US-A1- 2002 164 944

## Description

### TECHNICAL FIELD

The present invention relates to an Air Handling Unit providing fresh air to a building. The invention is in particular directed to the feature of making the air flow control more reliable in such a unit or system.

### BACKGROUND

In offices and other larger premises, there is often a need to be able to control the indoor climate separately in different parts of the premises or in individual rooms. An accurate local temperature and ventilation control is required to ensure a sufficient comfort level for the persons present in a building. Also heat generated by electric appliances and heat and exhaled air generated by persons inside the building have to be taken into account for the control. Together with the prevailing weather conditions, these factors have a large influence on the instantaneous demand for heating, cooling and ventilation capacity. In order to improve the comfort climate indoors the building could be provided with an Air handling Unit (AHU) for exhausting and supplying air to a Heating, Ventilation and Air Conditioning (HVAC) system. Similar systems has lately been more commonly used also in smaller buildings, e.g. family houses, as there is a desire for better insulation and thus also a need for a forced change of air in these buildings. In order to improve the energy efficiency of buildings using air conditioning systems with controlled air intake/air outlet is there a desire to lower heat losses by exhausting warm air to the outside and reduce heat losses by heat exchanging exhaust air with fresh air, e.g. in a heat recovery arrangement in the AHU. In systems for controlling the indoor climate in buildings, it is common that at least one heat exchanger is arranged in connection with the extract air duct. Such a heat exchanger can, for example, be a cross-flow or counter-flow heat exchanger (also called plate heat exchangers), and can be used for reducing the total energy consumption of the system by recovering a portion of the heat energy from the exhaust air before it is discharged. Thus, such a heat exchanger in connection with the extract air duct transfers heat energy from the exhaust air flowing out to the outdoor air flowing in. In certain conditions, frost or ice may form on the heat exchanger, which then has to go through a defrost cycle, during which the heat exchanger is heated to melt the ice. One way of performing defrosting (or deicing) of the extract air duct heat exchanger is to use the hot airflow leaving the building for heating and defrosting. In this case is the cold flow usually restricted or completely shut off in the part of the heat exchanger which shall be defrosted. Such a system is for example described in EP 2 546 581 or WO 01/22021.

The patent document US 2002/164944 teaches a ventilator device and method in which a heat exchanger is used to selectively transfer heat between fresh outside air entering and exhaust air leaving an enclosed space, when energy can be recovered from the exhaust air by doing so.

Furthermore, the patent document WO 2011/022331 teaches a transport refrigeration unit which comprises a damper assembly which is configured to operatively block an airflow in a defrost mode.

In order to make the system perform as desired it is vital to have a robust and reliable flow control system which control the airflows as desired and may change the air flows when switching between different modes, e.g. a heat recovery mode and a defrost mode, or different demand of air exchange in a building. In order to control the air flow in the AHU and HVAC they are generally provided with a multitude of dampers and fans in order to control the air flow and directing the desired quantity of air with a required quality to and from different locations. The failure of a damper or fan to function could be fatal to the efficiency of the AHU and the HVAC system and the possibility for an efficient heat recovery and air quality control. Even though the AHUs and HVACs today normally function well are there still some features in the damper arrangements which may be improved in order to ensure their functionality.

There is therefore a desire for an improved flow control arrangement and device in order to provide a more robust and efficient air flow control system.

### DISCLOSURE OF THE INVENTION

The invention is directed to solve a problem concerning the control of dampers which has been identified when developing Air Handling Units (AHUs) adapted for cold climates. The problem is that a damper may get stuck in a position due to ice formation. The reasons for why a damper may get stuck from ice formation may be due to several factors. For example, in cold climates there is a particular need for making the heat recovery function as efficient as possible in order to avoid significant heat losses due to ventilation of warm exhaust air and intake of cold supply air into a building. However, the development of such devices also has the effect that some portions in the heat recovery arrangement may have low temperatures, below zero, and thus cause the water in the air to condense and freeze. The cold outside air is in general not a problem concerning condensing and ice formation since it in many cases is rather dry, at least when the temperature is well below zero, and is subjected to a heating operation enabling a higher water content to be present in the air. In general, the risk for ice formation increases with the efficiency of the heat recovery arrangement since the more efficient the heat recovery arrangement is, the more will the warm side (the side from which heat is exhausted) in the heat arrangement be cooled down. To be noted, this air stream which will be cooled down is the exhaust air which in general is warm and humid. Furthermore, a heat recovery arrangement will also be more vulnerable concerning ice formation when the temperatures decreases of the airflows since the system will work at lower temperatures generally. Hence, the desire for an increased efficiency in the system at low temperature as well as the low temperature itself contributes to an increased risk for ice formation in a heat recovery system.

In order to get rid of the ice formed in the AHU or HVAC could there be a defrost operation as described in EP 2 546 581 or WO 01/22021. However, there is always a loss in the energy efficiency during such a defrost cycle since the heat exchanger cannot be fully used for its normal purpose, that is to say heat recovery, which results in an undesirably high energy consumption. There is thus a desire to have a rapid defrost operation. In many cases, this operation involves some kind of change of the flow paths in the AHU or HVAC and change of the position of one or several dampers. These flow paths may thereafter be reset to its original operation positions. However, the change of the flow paths, which may alter the humid exhaust air to change it through flow in the AHU or the HVAC system, together with the defrosting operation which will melt the ice formed in the system and add humidity to the air in the system, may cause the parts of the system to be subjected to a rather warm humid air. When the system is reset and returned to normal operation after a defrost operation may there thus be air having a rather high water content which may condense on the surfaces in the surroundings. Hence, the closing of a damper in such an environment, having condensed water from the air on the contact surfaces between the damper and the edges of the air channel through which air is flowing, may cause the damper to be stuck if the water starts to freeze. As is obvious, this risk is in particular high due to the defrost operation being performed which changes the temperature in different portion of the system while also, in general, changing the air flow through the systems and subjecting the system to air flows with a different water content compared to during normal, heat recovery operation and also inducing an increased humidity in the air due to melting of the ice. Hence, the system after a defrost operation will generally comprise air with higher water content while also closing certain dampers which in general are intended to be set in a set position until next defrost operation is needed. When the operation of the system is switched back to a heat recovery mode will parts once again start to change back its temperatures as they were before and if a damper is located in portion which will have a temperature below zero is there a great risk of freezing after the defrost operation. Hence, the invention is directed to preventing a damper in an Air Handling Unit or a Heating, Ventilation and Air Conditioning (HVAC) system in a building to be stuck in a closed position.

In summary, the invention relates to an air handling unit (AHU) in accordance with the features of appended claim 1 and a method for controlling a short cut damper in an air handling unit in accordance with the features of appended claim 11. Preferred embodiments are defined in the dependent claims.

The damper arrangement comprises a damper and an Electronic Control Unit (ECU). The ECU may be a local ECU located on or in the vicinity of the damper or being more distant, e.g. forming part of a centralized control system. The ECU could be dedicated to only control the damper, control a group of dampers or control further elements or even the AHU or the HVAC system.

The ECU is programmed to control the damper when the damper is changed from being in a first, open position (I) to a second, closed position (II) to be in a transition mode (III) before it will be in the second, closed position (II). The ECU is programmed to control the damper to oscillate or vibrate when the damper is in its transition mode (III). The transition mode (III) could for example set the damper to oscillate between being closed and open. Alternatively, the oscillations in the transition mode (III) could also be made by causing the damper to vibrate while the damper is in its closed position. It is an essential feature of the invention that said ECU is programmed to set the damper in said transition mode (III) after there has been a defrost cycle performed in the AHU.

The vibrations or oscillations are intended to avoid the damper to be stuck due to freezing. The oscillations and vibrations may differ depending on the design of the damper. In some cases the dampers move rather slowly and there may be a cycle of almost a minute to perform an opening and closing action of the damper. In general, the damper needs not to be fully opened when being oscillated between open and closed positions but the damper should be opened up such that there is no risk for contact surfaces between the damper plate and the edges of the air channel to be stuck to each other due to a freezing action. The ECU may be programmed to set the damper in the transition state for any desired time period, e.g. between 1 and 10 minutes.

The damper arrangement could be used for a damper comprised in an Air Handling Unit (AHU). The AHU comprises an extract air channel comprising at least one extract air inlet for guiding exhaust air from a building to the outside through at least one extract air outlet and a supply air channel comprising at least one supply air inlet for guiding fresh air from the outdoor into a building through at least one supply air outlet. The extract air channel and supply air channel are in a heat exchanging relation to each other via a heat exchanger.

The damper arrangement is working as a short cut damper which controls a flow in a shortcut connection between the extract air channel and the supply air channel. For example, the ECU could be programmed set the short cut damper in a first, essentially open position (I) and the extract air damper and supply air damper to be in a second, closed position (II) when the AHU (1) is working in a defrost mode. When the defrost mode is ended and the AHU (1) is changed to function in a heat recovery mode, the extract air damper and supply air damper are changed to be in a first, essentially open position (I) and the short cut damper to be set in a transition mode (III) before being set in a second, closed position (II).

In general, the risk for ice formation and that a damper get stuck in the system due to freezing is in particular high when there is a drastic change of temperatures in different parts of the air ventilation system and when a damper is set to a closed position. Hence, if a damper arrangement is comprised in an Air Handling Unit (AHU), the ECU could be connected to one or several temperatures sensors or temperature estimating means for estimating the temperature in the vicinity of the damper arrangement. The ECU could in this case be programmed to only control the damper arrangement to be in the transition mode (III) when there is an estimated risk for a temperature to be below zero degrees in the vicinity of the damper. To be noted, the actual temperature of the air may be above zero while there still is a risk for ice formation on surfaces which may be below zero.

Still a further parameter which is of interest for the risk of ice formation is the humidity in the air. Hence, the ECU could be connected to a humidity sensor or a humidity estimating means and is programmed to set the damper in said transition mode (III) in dependence of the humidity. It may of course be possible to use both the humidity values and temperatures in order to evaluate if the damper should be set in the transition mode (III).

When there is a defrost cycle performed in the AHU or in the HVAC system, there is a particularly high risk for a damper to be stuck in a closed position after the defrosting is performed. During the defrost operation, the temperature is elevated, which thus allows a higher water content in the air, while at the same time ice is melted which in general contributes to more water being present in the air. A generally higher moisture content of the air passing through the AHU may also be due to recirculation of humid exhaust air in the AHU. Hence, the ECU could be programmed to set the damper in the transition mode (III) after there has been a defrost cycle performed in the AHU or in some part of the HVAC system.

In addition to set the damper arrangement in the transition mode could the damper be arranged such that the material of the damper and/or the edges of the air duct which forms the contact surfaces are made from a hydrophobic material and having a surface with hydrophobic properties, e.g. silicone.

As previously briefly discussed, the time period for how long the damper arrangement should be in the transition mode (III) may be hard to decide. In many cases, the time period will be set to a threshold value which by testing and operation of the damper arrangement may be adjusted and improved. The time period could for example be dependent on temperatures and humidity. Still another method for deciding when to end the transition mode (III) could be to program the ECU to lift the damper from its closed position to its open position with a predefined time interval and increasing the time interval as long as the force needed to lift the damper to an open position is essentially the same. Hence, when there is an ice formation on the contact surfaces will there be a stronger force needed to separate the damper from the contact surface. If the force needed to perform an opening, oscillation or vibration of the damper is essentially constant, there should be no water present which freezes between the contact surfaces and the next opening, oscillation or vibration could be performed after a somewhat longer period. Furthermore, the ECU could be programmed to in its transition mode to lift the damper from its closed position to its open position with a predefined time interval, said time decreasing when the force needed to lift the damper to an open position is increasing in order to prevent the damper from being stuck due to ice formation. An increased force needed to open or oscillate the damper indicates that ice have been formed on the contact surfaces.

As previously disclosed, a damper is particularly vulnerable to be stuck by ice formation after a defrost operation has been performed due to release of water in the system and an increased temperature. The damper arrangement is thus in particular suitable for a damper located in an air channel which receives an air flow from a feature which is defrosted during a defrost mode, in particular for a damper which is open during the defrost operation and thereafter closed.

The invention also relates to a method for controlling a short cut damper in accordance with the features of appended claim 8. The damper is controlled to be in a transition mode (III), in which the damper is set to oscillate or vibrate, before the damper is set to be in a second, closed position (II) when changing from being in a first, open position (I) to a second, closed position (II) after there has been a defrost cycle performed in the AHU.

### BRIEF DESCRIPTION OF THE DRAWINGS

The present invention will now be described more in detail with reference to the appended drawings, where:
- Figure 1: discloses an Air Handling Unit (AHU) in heat recovery mode provided with damper arrangements
- Figure 2: discloses the AHU from figure 1 in defrost mode
- Figure 3: discloses the AHU from figure 1 provided with damper arrangements being in a transition mode (III)
- Figure 4: discloses a rotating damper arrangement changing from a first, open position (I) to a second, closed position (II) via a transition mode (III) with oscillating dampers.
- Figure 5: discloses a sliding damper arrangement changing from a first, open position (I) to a second, closed position (II) via a transition mode (III) with oscillating dampers.

### DETAILED DESCRIPTION

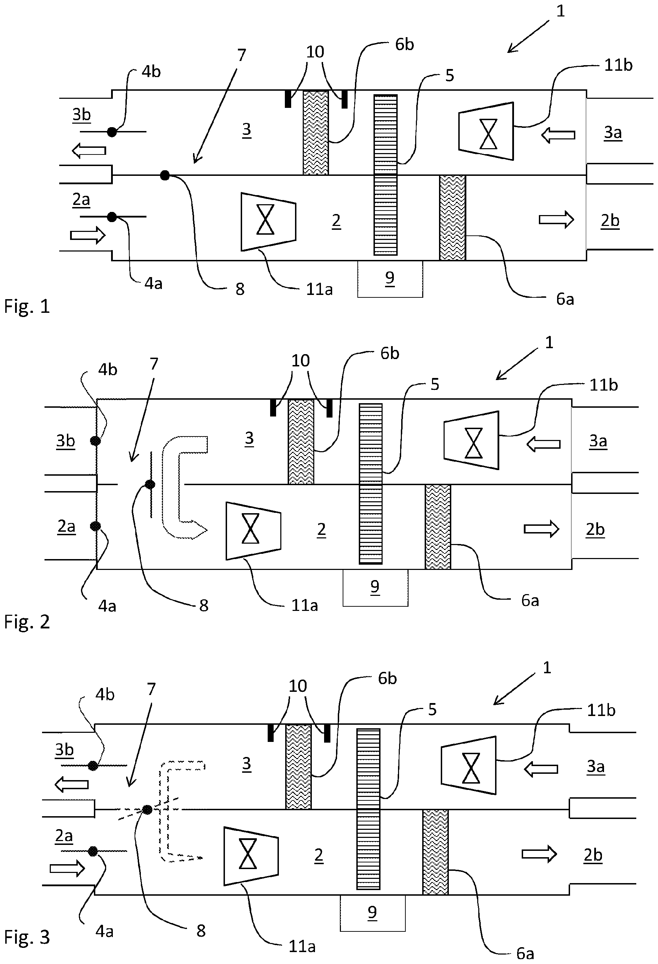

In figures 1-3 is disclosed an Air Handling Unit (AHU) 1 according to an embodiment of the invention. The AHU 1 comprises a supply air channel 2 having a supply air inlet 2a and a supply air outlet 2b for delivering fresh air to an air ventilation system in a building. The AHU further comprises an extract air channel 3 having an extract air inlet 3a receiving exhaust air, also commonly called extract air or indoor air, and guiding the exhaust air to the outside through an extract air outlet 3b. Hence, the left side of the AHU in the figures is intended to be connected to the surroundings or outdoor while the right side of the figures is intended to be connected to an air ventilation system in a building for distribution of fresh air to the building and extraction of exhaust air from the interior of the building. In order to control the air flow in the supply air channel 2 is the AHU 1 provided with a supply air damper 4a in the supply air channel 2 close to the supply air outlet 2b. In a similar way is the extract air channel 3 provided with an extract air damper 4b close to the extract air outlet 3b in order to control the flow of exhaust air in the extract air channel 3. The AHU is further provided with a heat exchanger 5, which for example may be a heat exchanger wheel, which is located to be in contact with and exchange heat between the flows of air in the supply air channel 2 and extract air channel 3. The AHU 1 also comprises a heat pump system 6 having a first media phase change unit 6a located in the supply air channel 2 and a second media phase change unit 6b located in the extract air channel 3. The heat pump system 6 transfers heat between the flow of air in the supply air channel 2 and extract air channel 3. Heat is transferred by using a heat transfer media which may evaporate and condense in the first and second media phase change units 6a, 6b. Hence, the media phase change units 6a, 6b may shift between working as evaporator and condenser such that the heat pump system 6 function as a reversible heat pump and may be controlled to transfer heat in either direction, i.e. transfer heat to the air flow in the supply air channel 2 from the air flow in the extract air channel 3 or vice versa. As can be seen in the figures, the first and second media phase change units 6a, 6b are located downstream of the heat exchanger 5 in the supply air channel 2 as well as the extract air channel 3.

The AHU is further provided with a short cut connection 7 through which air may flow between the supply air channel 2 and extract air channel 3. The air flow through the shirt cut connection 7 is controlled by a short cut damper 8. The shortcut connection 7 connects the supply air channel 2 upstream of the heat exchanger 5 and the first media phase change unit 6a with the extract air channel 3 downstream of the heat exchanger 5 the second media phase change unit 6a.

The AHU 1 is also connected to an Electronic Control Unit (ECU) 9 which may be connected to relevant features in order to receive control inputs and measured data of relevant parameters or to output relevant control instructions to flow control devices. For example, the ECU may receive inputs such as measurements from pressure indicating means 10, thermometers (not shown), humidity sensors (not shown) or control inputs from an input unit or remote control. The ECU 9 may also send control outputs to flow controllers such as the supply air damper 4a, the extract air damper 4b, the short cut damper 8, a supply air fan 11a or an extract air fan 11b as well as control instructions to the heat pump system 6 or heat exchanger 5.

Figures 1-3 disclose the same embodiment of the AHU 1 but disclosing the AHU 1 to be controlled differently in order to be in a heat recovery mode (figure 1) or in a defrost mode (figures 2 and 3).

Figure 1 thus discloses the AHU being in a heat recovery mode, i.e. a mode in which heat from the exhaust air in the extract air channel 3 is transferred to the air flowing into a building via the supply air channel 2. Heat is transferred via the heat exchanger 5 and the heat pump system 6. The heat pump system 6 is controlled by the ECU 9 such that the first media phase change unit 6a in the supply air channel 2 is working as a condenser and thus releasing heat to the surrounding air and the second media phase change unit 6b in the extract air channel 3 is working as an evaporator thus absorbing heat from the exhaust air.

In this heat recovery mode, according to figure 1, is the short cut connection 7 closed by the short cut valve 8 being in a second, closed position (II) while both the supply air damper 4a and extract air damper 4b in the supply air channel 2 respectively extract air channel 3 are in a first, open position (I).

If this mode is used during winter time, e.g. having an outdoor temperature below zero degrees, and wanting an indoor temperature of about 20 degrees, the indoor air leaving the building via the extract air channel 3 will first be cooled down in the heat exchanger 5, e.g. to a temperature close to zero degrees or even somewhat below, before continuing to the second media phase change unit 6b in the heat pump system 6. When the air comes in contact with the second media phase change unit 6b, which functions as an evaporator, and further cools the exhaust air to temperatures well below zero degrees Celsius, will the water content in the exhaust air condense and start to freeze on the cold surface of the second media phase change unit 6b. As the time passes will the layer of ice grow thicker on the second media phase change unit 6b and when sufficient time have passed will there be an ice layer which significantly decreases the heat exchange function in the heat pump and thus the overall efficiency of the AHU while also increasing the pressure drop over the second media phase change unit 6b. The initiation of a defrost cycle may for example be controlled by detecting the pressure drop over the second media phase change unit 6b by the pressure drop estimating means 10, which for example may be a pressure sensor upstream of respectively a pressure sensor downstream of the second media phase change unit 6b which thus may easily be used by the ECU to calculate the pressure drop and when the pressure drop is above a certain limit should there be a signal sent indicating a change to defrost mode should occur.

In figure 2 is shown how a defrost mode or defrost cycle may be performed. The short cut connection 7 has been fully opened by the short cut damper 8 switching to its second, open position (II) and both the supply air damper 4a and extract air damper 4b in the supply air channel 2 respectively extract air channel 3 have been completely switched and are now in the second, closed position. Hence, there will be no flow of fresh, supply air in the AHU in this mode disclosed in figure 2 but only recirculation of exhaust air entering through the extract channel inlet 3a, passing the heat exchanger 5 and the second media phase change unit 6b, now switched to function as evaporator in order to heat the surroundings. The air flow of exhaust air is thereafter guided to the supply air channel 2 via the short cut connection 7 in order to flow through the heat exchanger once more but now on the supply air channel 2 side before the flow continues to the first media phase change unit 6b now working as evaporator in order to cold the air flow passing by.

This mode will thus enable a heating operation of the second media phase change unit 6b working both from the outside and inside. The exhaust air will heat on the outside by the relatively hot flow of exhaust air, which no longer will be significantly cooled in the heat exchanger 5 before reaching the second media phase change unit 6b, since there is no fresh, cool supply air entering the AHU 1. In addition, the reversal of the heat pump system will heat the second media phase change unit 6b from the inside by condensing the cooling media inside. The defrost mode will continue until there is a control signal from the ECU indicating that the heat pump system 5 has been defrosted. The ECU 9 is thus sending a signal that the operation of AHU should be returned to heat recovery operation. However, after the defrost operation has ended it is very possible that there is a high degree of humidity in the air comprised in the AHU 1.

In figure 3 is disclosed how the supply air damper 4a in the supply air inlet 2a as well as the extract air damper 4b in the extract air channel 3 are set in the first, open position (I) allowing cold supply air to enter as disclosed in figure 3 which is the normal position in heat recovery mode. However, since it is expected that the air is rather humid and the switch of operation from defrost mode to heat recovery mode will there be a great chance of freezing of water condensed from the air. This could cause a freezing of air condensed on the contact surfaces of the short cut damper 8 and the short cut connection 7. In order to avoid the short cut damper 8 to get stuck in the second, closed position (II) will the ECU 9 send a signal to set the short cut damper 8 in a transition mode (III) in which the short cut damper 8 will oscillate between being open and closed. This is illustrated by using dashed lines for the short cut damper 8 indicating two different positions between which the short cut damper oscillates. The transition mode will continue for a while until it is considered that there will be no more risk for freezing and the damper get stuck in a closed position where after the operational mode of the AHU will be the normal heat recovery mode as disclosed in figure 1.

In figure 1-3 is disclosed an embodiment in which the operation of a damper in a transition mode (III) may be beneficial. It is an essential feature of the invention that the ECU 9 is programmed to set the damper 8 in said transition mode (III) after there has been a defrost cycle performed in the AHU 1.

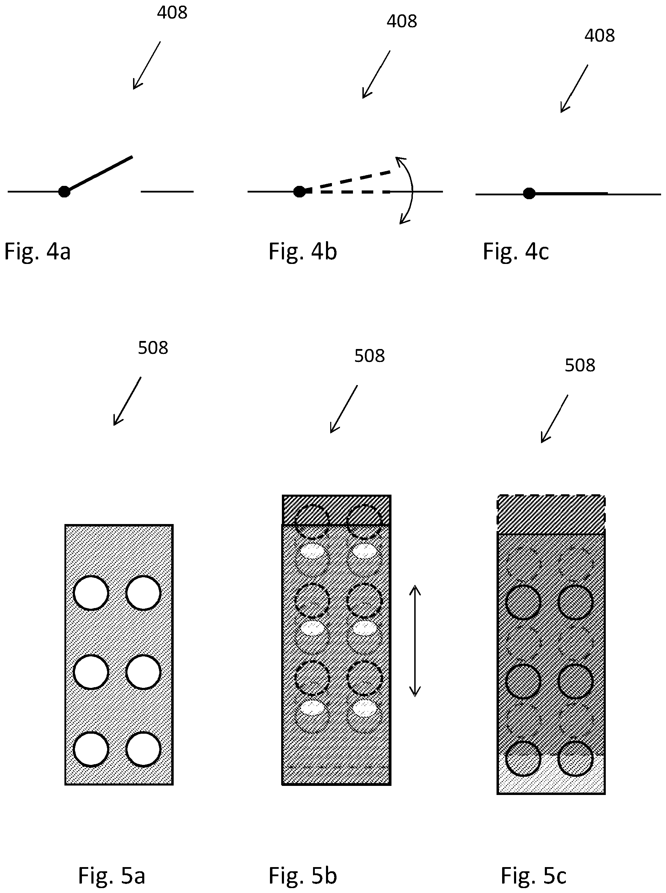

In figure 4 is disclosed how a rotational damper 408 could be controlled by an ECU (not shown) to switch from being in a first, open position (I) in figure 4a to a second, closed position (II) in figure 4c via a transition mode (III) disclosed in figure 4b. The damper 408 will oscillate between an open position and a closed position for a while until there is no risk for the damper being stuck in its second, closed position (II).

In figure 5 is disclosed the change of a sliding damper to switch from being in a first, open position (I) in figure 5a to a second, closed position (II) in figure 5c via a transition mode (III) disclosed in figure 4b. The damper 508 will oscillate between an open position and a closed position for a while until there is no risk for the damper being stuck in its second, closed position (II). It may even be possible that the damper 508 may oscillate back and forth while being closed if there is enough space to move without causing the holes to overlap.

## Claims

1. An Air Handling Unit, AHU, (1) for a building having an extract air channel (3) comprising at least one extract air inlet (3a) for guiding exhaust air from a building to the outside through at least one extract air outlet (3b) and a supply air channel (2) comprising at least one supply air inlet (2a) for guiding fresh air from the outdoor into a building through at least one supply air outlet (2b), said extract air channel (3) and said supply air channel (2) being in a heat exchanging relation to each other via a heat exchanger (5), said AHU (1) further comprising a damper arrangement comprising a short cut damper (8) which controls a flow in a shortcut connection (7) between the extract air channel (3) and the supply air channel (2) and an Electronic Control Unit (ECU) (9) **characterized in that**
said ECU (9) is programmed to control the short cut damper ( 8) when the short cut damper (8) is changed from being in a first, open position (I) to a second, closed position (II) to be in a transition mode (III) before it will be in the second, closed position (II), said transition mode (III) being programmed to set the short cut damper (8) to oscillate or vibrate after there has been a defrost cycle performed in the AHU (1).

2. An AHU (1) according to claim 1 **characterized in that** the damper arrangement includes an extract air damper (4b) in order to control the air flow in the extract air channel (3) or a supply air damper (4a) in order to control the air flow in the supply air channel (2).

3. An AHU (1) according to claim 2 **characterized in that** said ECU (9) is programmed to set the short cut damper (8) in a first, essentially open position (I) and the extract air damper (4b) and supply air damper (4a) to be in a second, closed position (II) when the AHU (1) is working in a defrost mode and to set the extract air damper (4b) and supply air damper (4a) to be in a first, essentially open position (I) when the AHU (1) changes to a heat recovery mode and the short cut damper (8) to be in a transition mode (III) before being set in a second, closed position (II).

4. An AHU (1) according to any previous claim **characterized in that** said ECU (9) is connected to one or several temperatures sensors or temperature estimating means for estimating the temperature in the vicinity of said short cut damper (8), said ECU (9) programmed to only control the short cut damper (8) to be in said transition mode (III) when there is an estimated risk for a temperature to be below zero degrees in the vicinity of the short cut damper (8, 408, 508).

5. An AHU (1) according to any previous claim **characterized in that** said ECU (9) is connected to a humidity sensor or humidity estimating means and is programmed to set the short cut damper (8, 408, 508) in said transition mode (III) in dependence of the humidity.

6. An AHU (1) according to claim 4 and 5 **characterized in that** said ECU (9) is programmed to set the short cut damper (8, 408, 508) in said transition mode (III) in dependence of the humidity and the temperature.

7. An AHU (1) according to any previous claim **characterized in that** the material of contact surfaces of the short cut damper (8, 408, 508) and/or the contact surfaces are made from a hydrophobic material.

8. An AHU (1) according to any previous claim **characterized in that** the ECU (9) is programmed in its transition mode (III) to lift the short cut damper (8, 408, 508) from its closed position to its open position with a predefined time interval, said time interval increasing as long as the force needed to lift the damper to an open position is essentially the same.

9. An AHU (1) according to claim 8 **characterized in that** the ECU (102) is programmed in its transition mode (III) to lift the short cut damper (8) from its closed position to its open position with a predefined time interval, said time interval decreasing when the force needed to lift the damper to an open position is increasing.

10. An AHU (1) according to any previous claim **characterized in that** the short cut damper (8, 408, 508) is located in an air channel (2, 3) which receives an air flow from a feature which is defrosted during a defrost mode.

11. A method for controlling a short cut damper (8, 408, 508) in an Air Handling Unit, AHU, (1) for a building, said short cut damper (8, 408, 508) being controllable to change from being in a first, open position (I) to a second, closed position (II)
**characterized in that**
the short cut damper (8, 408, 508) is controlled to be in a transition mode (III), in which the short cut damper (8, 408, 508) is set to oscillate or vibrate, before the short cut damper (8, 408, 508) is set to be in said second, closed position (II) when changing from being in the first, open position (I) to the second, closed position (II) after there has been a defrost cycle performed in the AHU (1).

## Patentansprüche

1. Lüftungsgerät, AHU, (1) für ein Gebäude mit einem Abluftkanal (3), das mindestens einen Ablufteinlass (3a) zum Leiten von Abluft aus einem Gebäude nach außen über mindestens einen Abluftauslass (3b) umfasst, und einem Zuluftkanal (2), der mindestens einen Zulufteinlass (2a) zum Leiten von Frischluft aus dem Freien in ein Gebäude über mindestens einen Zuluftauslass (2b) umfasst, wobei der Abluftkanal (3) und der Zuluftkanal (2) über einen Wärmetauscher (5) in einer Wärmetauschbeziehung zueinander stehen, wobei das AHU (1) ferner eine Klappenanordnung mit einer Umgehungsklappe (8), die eine Strömung in einer Umgehungsverbindung (7) zwischen dem Abluftkanal (3) und dem Zuluftkanal (2) steuert, und ein elektronisches Steuergerät (ECU) (9) umfasst,
**dadurch gekennzeichnet, dass**
das ECU (9) dazu programmiert ist, die Umgehungsklappe (8), wenn die Umgehungsklappe (8) aus einer ersten, geöffneten Stellung (I) in eine zweite, geschlossene Stellung (II) gewechselt wird, in einen Übergangsmodus (III) zu steuern, bevor sie die zweite, geschlossene Stellung (II) einnimmt, wobei der Übergangsmodus (III) dazu programmiert ist, die Umgehungsklappe (8) zum Schwingen oder Vibrieren einzustellen, nachdem ein Abtauzyklus in dem AHU (1) durchgeführt wurde.

2. AHU (1) gemäß Anspruch 1, **dadurch gekennzeichnet, dass** die Klappenanordnung eine Abluftklappe (4b) zum Steuern des Luftstroms im Abluftkanal (3) oder eine Zuluftklappe (4a) zum Steuern des Luftstroms im Zuluftkanal (2) enthält.

3. AHU (1) gemäß Anspruch 2, **dadurch gekennzeichnet, dass** das ECU (9) dazu programmiert ist, die Umgehungsklappe (8) in eine erste, im Wesentlichen geöffnete Stellung (I) und die Abluftklappe (4b) und die Zuluftklappe (4a) in eine zweite, geschlossene Stellung (II) zu bringen, wenn das AHU (1) in einem Abtaumodus arbeitet, und die Abluftklappe (4b) und die Zuluftklappe (4a) in eine erste, im Wesentlichen geöffnete Stellung (I) zu bringen, wenn das AHU (1) in einen Wärmerückgewinnungsmodus wechselt, und die Umgehungsklappe (8) in einen Übergangsmodus (III) zu bringen, bevor sie in eine zweite, geschlossene Stellung (II) gebracht wird.

4. AHU (1) gemäß einem der vorhergehenden Ansprüche, **dadurch gekennzeichnet, dass** das ECU (9) mit einem oder mehreren Temperatursensoren oder Temperaturschätzmitteln zum Schätzen der Temperatur in der Nähe der Umgehungsklappe (8) verbunden ist, wobei das ECU (9) dazu programmiert ist, die Umgehungsklappe (8) nur dann in den Übergangsmodus (III) zu steuern, wenn ein geschätztes Risiko besteht, dass die Temperatur in der Nähe der Umgehungsklappe (8, 408, 508) unter null Grad liegt.

5. AHU (1) gemäß einem der vorhergehenden Ansprüche, **dadurch gekennzeichnet, dass** das ECU (9) mit einem Feuchtigkeitssensor oder einem Feuchtigkeitsschätzmittel verbunden und dazu programmiert ist, die Umgehungsklappe (8, 408, 508) in Abhängigkeit von der Luftfeuchtigkeit in den Übergangsmodus (III) einzustellen.

6. AHU (1) gemäß Anspruch 4 und 5, **dadurch gekennzeichnet, dass** das ECU (9) dazu programmiert ist, die Umgehungsklappe (8, 408, 508) in Abhängigkeit von der Luftfeuchtigkeit und der Temperatur in den Übergangsmodus (III) einzustellen.

7. AHU (1) gemäß einem der vorhergehenden Ansprüche, **dadurch gekennzeichnet, dass** das Material der Kontaktflächen der Umgehungsklappe (8, 408, 508) und/oder die Kontaktflächen aus einem hydrophoben Material bestehen.

8. AHU (1) gemäß einem der vorhergehenden Ansprüche, **dadurch gekennzeichnet, dass** das ECU (9) in seinem Übergangsmodus (III) dazu programmiert ist, die Umgehungsklappe (8, 408, 508) mit einem vordefinierten Zeitintervall aus ihrer geschlossenen Stellung in ihre geöffnete Stellung anzuheben, wobei das Zeitintervall so lange zunimmt, wie die zum Anheben der Klappe in eine geöffnete Stellung erforderliche Kraft im Wesentlichen gleich ist.

9. AHU (1) gemäß Anspruch 8, **dadurch gekennzeichnet, dass** das ECU (102) in seinem Übergangsmodus (III) dazu programmiert ist, die Umgehungsklappe (8) mit einem vordefinierten Zeitintervall aus ihrer geschlossenen Stellung in ihre geöffnete Stellung anzuheben, wobei das Zeitintervall abnimmt, wenn die zum Anheben der Klappe in eine geöffnete Stellung erforderliche Kraft zunimmt.

10. AHU (1) gemäß einem der vorhergehenden Ansprüche, **dadurch gekennzeichnet, dass** sich die Umgehungsklappe (8, 408, 508) in einem Luftkanal (2, 3) befindet, der einen Luftstrom aus einer Einrichtung empfängt, die während eines Abtaumodus abgetaut wird.

11. Verfahren zum Steuern einer Umgehungsklappe (8, 408, 508) in einem Lüftungsgerät, AHU, (1) für ein Gebäude, wobei die Umgehungsklappe (8, 408, 508) dazu steuerbar ist, aus einer ersten, geöffneten Stellung (I) in eine zweite, geschlossene Stellung (II) zu wechseln,
**dadurch gekennzeichnet, dass**
die Umgehungsklappe (8, 408, 508) in einen Übergangsmodus (III) gesteuert wird, in dem die Umgehungsklappe (8, 408, 508) zum Schwingen oder Vibrieren eingestellt ist, bevor die Umgehungsklappe (8, 408, 508) in die zweite, geschlossene Stellung (II) gesteuert wird, wenn sie aus der ersten, geöffneten Stellung (I) in die zweite, geschlossene Stellung (II) wechselt, nachdem in dem AHU (1) ein Abtauzyklus durchgeführt wurde.

## Revendications

1. Unité de traitement d'air, AHU, (1) pour un bâtiment ayant un canal d'air d'extraction (3) comprenant au moins une entrée d'air d'extraction (3a) pour guider de l'air d'évacuation, depuis un bâtiment, vers l'extérieur, à travers au moins une sortie d'air d'extraction (3b) et un canal d'air d'alimentation (2) comprenant au moins une entrée d'air d'alimentation (2a) pour guider de l'air frais, depuis l'extérieur, pour qu'il entre dans un bâtiment à travers au moins une sortie d'air d'alimentation (2b), ledit canal d'air d'extraction (3) et ledit canal d'air d'alimentation (2) étant dans une relation d'échange de chaleur l'un avec l'autre par l'intermédiaire d'un échangeur de chaleur (5), ladite AHU (1) comprenant en outre un agencement d'amortisseur comprenant un amortisseur de raccourci (8) qui commande un écoulement dans un raccord de raccourci (7) entre le canal d'air d'extraction (3) et le canal d'air d'alimentation (2) et une unité de commande électronique (ECU) (9),
**caractérisée en ce que**
ladite ECU (9) est programmée pour commander l'amortisseur de raccourci (8) lorsque l'amortisseur de raccourci (8) passe d'un état dans une première position ouverte (I) à une seconde position fermée (II) pour être dans un mode de transition (III) avant qu'il soit dans la seconde position fermée (II), ledit mode de transition (III) étant programmé pour régler l'amortisseur de raccourci (8) pour osciller ou vibrer après qu'un cycle de dégivrage a été réalisé dans l'AHU (1).

2. AHU (1) selon la revendication 1, **caractérisée en ce que** l'agencement d'amortisseur inclut un amortisseur d'air d'extraction (4b) afin de commander l'écoulement d'air dans le canal d'air d'extraction (3) ou un amortisseur d'air d'alimentation (4a) afin de commander l'écoulement d'air dans le canal d'air d'alimentation (2).

3. AHU (1) selon la revendication 2, **caractérisée en ce que** ladite ECU (9) est programmée pour régler l'amortisseur de raccourci (8) dans une première position essentiellement ouverte (I) et l'amortisseur d'air d'extraction (4b) et l'amortisseur d'air d'alimentation (4a) pour être dans une seconde position fermée (II) lorsque l'AHU (1) est en fonctionnement dans un mode de dégivrage et pour régler l'amortisseur d'air d'extraction (4b) et l'amortisseur d'air d'alimentation (4a) pour être dans une première position essentiellement ouverte (I) lorsque l'AHU (1) passe à un mode de récupération de chaleur et l'amortisseur de raccourci (8) pour être dans un mode de transition (III) avant d'être réglé dans une seconde position fermée (II).

4. AHU (1) selon une quelconque revendication précédente, **caractérisée en ce que** ladite ECU (9) est connectée à un ou plusieurs capteurs de température ou moyens d'estimation de température pour estimer la température dans le voisinage dudit amortisseur de raccourci (8), ladite ECU (9) étant programmée pour seulement commander l'amortisseur de raccourci (8) pour être dans ledit mode de transition (III) lorsqu'il y a un risque estimé qu'une température soit inférieure à zéro degré dans le voisinage de l'amortisseur de raccourci (8, 408, 508).

5. AHU (1) selon une quelconque revendication précédente, **caractérisée en ce que** ladite ECU (9) est connectée à un capteur d'humidité ou un moyen d'estimation d'humidité et est programmée pour régler l'amortisseur de raccourci (8, 408, 508) dans ledit mode de transition (III) en fonction de l'humidité.

6. AHU (1) selon la revendication 4 et 5, **caractérisée en ce que** ladite ECU (9) est programmée pour régler l'amortisseur de raccourci (8, 408, 508) dans ledit mode de transition (III) en fonction de l'humidité et de la température.

7. AHU (1) selon une quelconque revendication précédente, **caractérisée en ce que** le matériau de surfaces de contact de l'amortisseur de raccourci (8, 408, 508) et/ou les surfaces de contact sont faits d'un matériau hydrophobe.

8. AHU (1) selon une quelconque revendication précédente, **caractérisée en ce que** l'ECU (9) est programmée dans son mode de transition (III) pour lever l'amortisseur de raccourci (8, 408, 508) depuis sa position fermée jusqu'à sa position ouverte avec un intervalle de temps prédéfini, ledit intervalle de temps augmentant du moment que la force nécessaire pour lever l'amortisseur jusqu'à une position ouverte est essentiellement la même.

9. AHU (1) selon la revendication 8, **caractérisée en ce que** l'ECU (102) est programmée dans son mode de transition (III) pour lever l'amortisseur de raccourci (8) depuis sa position fermée jusqu'à sa position ouverte avec un intervalle de temps prédéfini, ledit intervalle de temps diminuant lorsque la force nécessaire pour lever l'amortisseur jusqu'à une position ouverte augmente.

10. AHU (1) selon une quelconque revendication précédente, **caractérisée en ce que** l'amortisseur de raccourci (8, 408, 508) est situé dans un canal d'air (2, 3) qui reçoit un écoulement d'air à partir d'un dispositif qui est dégivré durant un mode de dégivrage.

11. Procédé pour commander un amortisseur de raccourci (8, 408, 508) dans une unité de traitement d'air, AHU, (1) pour un bâtiment, ledit amortisseur de raccourci (8, 408, 508) étant commandable pour passer d'un état dans une première position ouverte (I) à une seconde position fermée (II),
**caractérisé en ce que**
l'amortisseur de raccourci (8, 408, 508) est commandé pour être dans un mode de transition (III), dans lequel l'amortisseur de raccourci (8, 408, 508) est réglé pour osciller ou vibrer, avant que l'amortisseur de raccourci (8, 408, 508) soit réglé pour être dans ladite seconde position fermée (II) lors du passage de l'état dans la première position ouverte (I) à la seconde position fermée (II) après qu'un cycle de dégivrage a été réalisé dans l'AHU (1).
